# EUROPEAN PATENT APPLICATION

(11) **EP 4 696 426 A1**
(43) Date of publication of application: **18.02.2026**
(21) Application number: 25208296.1
(22) Date of filing: 10.08.2021
(51) Int. Cl.: B08B 17/02, A01K 1/015

(54) **FLOOR AND CLEANING ARRANGEMENT**

(30) Priority: 10.08.2020 NL 1043749; 31.12.2020 NL 1043891
(62) Divisional of application: 21756077.0
(71) Applicant: CSR B.V., 5405 NZ Uden (NL)
(72) Inventor: DE JONG, Gerardus Majella, 5405 NZ UDEN (NL)
(74) Representative: Dohmen, Johannes Maria Gerardus

(57) **Abstract**

Floor comprising a load-bearing liquid-tight surface (2) having a liquid-tight layer of Polycarbonate/Acrylonitrile Butadiene Styrene, PC/ABS, and a cleaning arrangement (26, 27) for collecting liquid and solid substances applied at the load-bearing surface during use. The cleaning arrangement includes a liquid collection arrangement (27), sideways of the floor, to which the load-bearing surface connects by a down slope (15, 16) and a spraying system for applying cleaning liquid to the load-bearing surface. Solid substances applied at the load-bearing surface are collected by a rinse-slide-suction facility of a cleaning unit (60) independently moveable over the floor. The cleaning arrangement equipped with a further spraying system, for additional cleaning of the floor by applying cleaning liquid thereon, the moveable cleaning unit (60) comprises a further suction facility for collecting cleaning liquid. A moveable cleaning unit (60) and a floor or base arrangement having a load-bearing surface made of PC/ABS are also provided.

## Description

### Technical area

The present application relates to a floor or base arrangement, having a load-bearing liquid-tight surface. In particular, a floor with a cleaning arrangement for collecting liquid and solid substances applied at the load-bearing surface of the floor during use. More particularly, the application relates to a floor or base arrangement with a cleaning arrangement forming part of a facility for keeping stable animals. Furthermore, the present application relates to a cleaning unit that is independently moveable over the load-bearing surface of the floor as well as a liquid-tight floor or base arrangement.

### Background

**In** general, a liquid-tight floor or base arrangement is used where it is necessary to prevent environmentally hazardous or environmentally damaging liquids and/or solid substances from being released into the environment outside the liquid-tight arrangement as a result of certain activities, including human or animal activities.

The expression 'liquid-tight floor or base arrangement' in the present application means a floor or base arrangement or part of a floor or base arrangement having a load-bearing surface that is intrinsically impermeable to liquid and solid substances. If the floor or base arrangement is also impermeable to gas, it is referred to as a gas- and liquid-tight floor or base arrangement. In the case of a liquid-tight or gas- and liquid-tight floor or base arrangement consisting of separate floor components, the separate floor components are liquid-tightly or gas- and liquid-tightly connected to each other in such a way that a floor or base arrangement constructed in this way is impermeable to liquid and/or solid substances or to liquid and/or solid substances and/or gas, respectively, from the load-bearing surface.

Legal requirements for many operational activities regarding the prevention of environmental contamination of soil, soil water, air and/or the environment have led to the mandatory construction and maintenance of liquid-tight or gas- and liquid-tight floor or base arrangements and, if necessary, additional measures.

In order to prevent degradation of the environment, air, soil and/or groundwater by contaminants such as fuels or other chemical or oxidizing substances, organic or inorganic liquids, mineral oils, alkalis and acids, manure, urine, nitrate, ammonia, nitrogen, biological juices, odors, fumes or vapors, and wash water, several provisions and measures must be taken on the basis of national and international regulations in order to realize a negligible risk against their leakage or deposition to the environment and soil.

This may include the installation of liquid-tight and/or gas- and liquid-tight floor or base arrangements at locations where there is a high or increased risk of, among other things, spills, leaks, ammonia formation, NH₃, carbon dioxide formation, CO₂, industrial accidents or similar calamities in which undesirable liquids or gases are released, spreading thereof, nitrogen volatilization, odor nuisance or eutrophication and the like as a result of which dangerous or environmentally undesirable situations for the physical living environment and soil and groundwater contamination may arise.

Examples of such locations include rinsing and spraying activities at car and truck washes, such as, for example, the vehicle washing installation having a liquid collection drainage trench described in U.S. Patent Application US2010/059090, industrial cleaning and spill catching at motor vehicle refueling in the broadest sense, as well as the collection of manure and urine in a stable arrangement or animal holding room, where one or more animals or livestock are gathered.

These practices make up the majority of operational activities where there is a legal requirement to perform these activities above and on liquid-tight floor or base arrangements, respectively, or to store waste (liquid) materials and the like in a liquid- tight or closed collection arrangement.

In addition to the specific requirements to be met by such a liquid- and/or substance-tight floor or base arrangement and other relevant environmental measures, it may therefore also be necessary to provide a liquid- and/or substance-tight collection, storage, treatment, and discharge system for the collected liquids and/or other substances and dirt carried along with the liquids and/or substances. The liquids and solid substances applied at common liquid-tight floors or base arrangements will flow as a sludge-liquid mixture under the influence of a down slope of the floor and gravity through a pipe or grate system to a sludge trap and/or separator placed at the lowest point or level, possibly underground.

US patent 5 462 655 describes an airplane washing system consisting of a resilient, sloping mat of a synthetic plastic material, on the load-bearing surface of which fixedly positioned vacuum suction nozzles engage for integral suctioning of liquids applied at the surface.

From the state of the art, various mostly structurally implemented liquid-tight or gas- and liquid-tight basement, floor or base arrangements are known, made of elements of reinforced or unreinforced concrete, in-situ poured reinforced or unreinforced concrete, metal systems or combinations thereof, asphalt, ceramic facilities, synthetic resin-bonded coatings and undercoats such as polyethene (PE) films and mixtures of sand-bentonite and a polymer gel, among others.

Additional facilities such as wastewater, water/sludge, urine, and manure drainage systems in, for example, slurry pits, company sewers, gutters, sludge pits and separators are also part of the usual liquid- and/or substance-tight collection, treatment and discharge facilities. These collection, treatment and discharge facilities must be connected to a liquid- and/or substance-tight floor, base or cellar arrangement or its liquid- and/or substance-tight collection system in such a way that the liquids and/or substances cannot reach the non-loaded side or sides of the liquid-tight floor or cellar facility.

From Dutch patents NL 1040025 and NL 2015687, a liquid-tight floor arrangement is known comprising adjacent connectable plate-shaped floor elements or floor panels of durable and chemical-resistant plastic composite, with an integrated collection and discharge system for (liquid) substances. More particularly, each element or panel is resistant to the individual or collective occurrence of dynamic, static, mechanical, thermal and chemical loads, and axle loads of vehicles, while maintaining a relatively light weight, easy and fast placement and durability.

The liquid- and/or substance-tight floor or base arrangement known from NL 1042005 is suitable for a fast and flexible installation of a liquid- and/or substance-tight floor arrangement with an integrated drainage system and with length and width dimensions which are a multiple of those of a single floor element. The use of grid or bridge plates to cover the drainage channels of coupled floor elements at the load-bearing or loadable surface is disclosed.

The liquid- and/or substance-tight floor or base arrangement known from NL 2015687 is also suitable for fast and flexible installation of a liquid- and/or substance-tight floor arrangement with integrated drainage system and with length and width dimensions which are a multiple of those of a single floor element. For the coupling of the floor panels, the use of a flange or lip extending parallel to the load-bearing surface with a nose-shaped body pointing in the direction away from the load-bearing surface is disclosed. In the case of adjacent coupled floor panels, the nose-shaped body of one floor panel appropriately engages with a liquid drainage channel of the other floor panel for the purpose of covering the drainage channels of coupled floor elements at the load-bearing or loadable surface.

US patent application 2005/0204662 describes a system of in one-piece and plastic, in particular polyvinyl chloride (PVC), elongated floor plates having an upper surface or top surface in which a system of parallel drainage channels is formed, for discharging in a longitudinal direction (axial) from a floor plate, over the surface thereof, liquid collected by the floor plate to a liquid collection device located on one or both ends adjacent to and outside the floor plate into which each of the drainage channels discharges.

These floor plates can be adjacently coupled in a transverse direction, wherein the cooperating coupling means of adjacent floor plates form a composite drainage channel in longitudinal (axial) direction of the coupled floor plates, for draining liquid leaking from the top surface through the gap (coupling gap) formed between adjacent floor plates. These floor plates have an open channel plate structure, with a number of hollow chambers or channels extending longitudinally of a floor plate between the upper surface or top surface and a parallel lower surface.

From the International Patent Application WO 2000/062603, a matting of elongated mat modules is known, which can be adjacently placed - in a transverse direction - with their longitudinal edges. In and distributed over the load-bearing surface, each mat module is provided with apertures which discharge into or connect to drainage ducts extending transversely under the load-bearing surface of a mat module, in longitudinal direction thereof. The respective drainage ducts connect to a liquid collection arrangement placed at the short sides adjacent to and outside a mat module.

The floor plates or floor panels known from US 2005/0204662 and WO 2000/062603, i.e. the matting, do not offer an integrated solution for the discharge of liquids from coupled floor panels. As a result, these known floor plates or floor panels i.e. the matting, are unsuitable for a flexible, fast and without drastic constructive provisions installation of a liquid- and/or substance-tight floor arrangement with length and width dimensions which are a multiple of those of a single floor element, floor plate or mat module. Furthermore, the disclosed constructions are in no way suitable for the construction of a liquid- and/or substance-tight floor arrangement as a support for installations but also for traffic driving up and over, among other things in the form of (often heavy) static and dynamic wheel loads, point loads or wheel load repetitions.

A constructional arrangement that is impermeable to liquid and/or substance, for example concrete, is intended to remain impermeable to liquid and/or substances for the duration of its use, as well as being the support for constructional structures and installations. The relative porosity of concrete constructional arrangements is vulnerable for chemical or physical attack and thus affects the liquid-tightness of the arrangement. Due to this relative porosity, substances and liquids are retained at capillary level where substances and liquids can remain bound in the surface of the floor field.

Many common, often concrete liquid- and/or substance-tight floor, basement or base arrangements have a limited or selective resistance to short-term or long-term influences of chemicals, oxidizing substances, alkalis or acids, urine, manure and other liquid and/or substance loads that the arrangement is designed to handle.

Concrete, for example, can tolerate acids very poorly without becoming corroded due to the lime component present. Concrete is also strong on pressure but not on tension, so that a special reinforcement must compensate for this. If cracks appear, this again violates the requirement of liquid- and/or substance-tightness. Metal, as used for example for concrete reinforcement, can corrode or be subject to metal fatigue and thus lose its intended properties.

For certain (heavy) loads, a concrete structure must therefore be dimensioned more heavily. Fatigue and weathering of the materials also limit the lifespan. Certain point loads often lead to crumbling in concrete facilities whereby the liquid- and/or substance-tightness is directly affected.

Consequently, the robustness and relatively heavy weight of structural liquid- and/or substance-tight floor and basement structures is often a non-optimal combination of the function of supporting dynamic loads and, for example, static wheel, axle, and point loads in combination with the deterioration caused by chemical or biological loading and the function of liquid- and/or substance-tightness.

Most of these facilities will not be relocated during their life expectancy. In fact, except for some structural elements, any relocation of traditional facilities is usually accompanied by deformation, whereby the entire liquid- and/or substance-tightness and additional collection arrangement should be considered lost.

A common stable environment for keeping stable animals or livestock is generally, but not exclusively, constructed as a so-called cubicle stable and usually has a separate part where the animals can lie down and a separate part where the animals can walk/stand. In particular, the part of a stable where the animals stand and walk constitutes the physical area where deposition of urine and manure occurs. This is popularly called 'the manure corridor'.

The technical layout of such an existing manure corridor, in most stables, includes an open grid or slotted floor that also forms the roof of a liquid- and/or substance-tight collection facility or manure pit located below.

From the Dutch patent application NL 9300849, a mat constructed from tiles having a hole pattern is known as a stable floor, for example from non-slip rubber fiber manufactured tiles, where the holes in the tiles are lined up with holes in the floor above a manure pit.

US patent 2 665 664 describes a facility for keeping stable animals constructed of a concrete floor with a gutter formed therein and resilient rubber pads applied to the floor which engage the concrete floor by means of lips and detents to form a positive lock. The pads have a convex shaped load-bearing surface and are provided with grooves that connect to the gutter, for the collection of liquid. Partition members projecting upwards from the load-bearing surface are fitted between adjacent pads.

From the German patent application DE 10 2004 023 367 a floor plate element is known for improving the well-being and comfort of stable animals. This floor plate element is constructed from a grid-shaped, connectable frame with a form-fitting elastic panel inserted into it which, as a result of its elasticity, has a non-slip load-bearing surface to be walked on, facing the animals. The surface to be walked on or loaded may additionally have a profile, such as a bubble profile, to prevent the animals from slipping on it. The panel may be made entirely of rubber.

US patent 5 456 209 describes preformed, connectable hollow floor parts comprising heating pipes for the installation of a stable floor having a heated load-bearing surface or tread on. On the non-loaded or non-walkable surface, the floor parts are provided with a heat insulating layer.

In the existing or common stable environments or cubicle stables, in the manure corridor the initial mixing of manure and urine takes place as they are not separated from each other. On the physical stable floor or slatted floor, liquid and solid substances are mixed together or further mixed, with part or all of the manure and urine entering the manure pit under the stable feed through a grid or slotted system under the influence of gravity and/or being collected by a mechanical movement by a cleaning unit that can be moved over the floor, such as by means of a manure scraper or slurry robot, and also discharged or deposited in the manure pit.

In practice, using a manure scraper, the mixture of urine and manure remaining on the stable floor or slatted floor is sheared through the recesses in the slatted floor and/or to a centrally located discharge point of the slatted floor, ending in the manure pit under the stable floor or slatted floor. The combined, mixed product is referred to as 'slurry' from this point on.

The manure and urine accumulate in the manure pit as slurry until the manure pit is filled to the point where it is emptied mechanically and processed elsewhere. The time of emptying is bound by calendar rules of a competent (governmental) authority. During this, often longer, residence time in the manure pit, the slurry can, by its very nature, form permanent ammonia which then rises through the slatted floor into the stable environment and from here, barring some effect-oriented measures, can volatilize directly into the physical living environment.

Ammonia, NH₃, is a gas that is produced in livestock when urea from the urine of cows; pigs or other animals is broken down by the enzyme urease. This enzyme is found in the feces/manure and therefore also in the manure-stained surfaces in a stable and in the slurry.

From various literature sources and publications, it can be deduced that ammonia, a mixture of nitrogen and hydrogen, is a gas with a characteristic, strongly pungent odor. An excess of ammonia harms the environment. Ammonia is alkaline but is converted to nitric acid by oxidation in the air and in the soil. This acidification is harmful to forest and natural areas. More than half of the acidification in the Netherlands is caused by the emission of ammonia. In addition, ammonia leads to fertilization or eutrophication. Ammonia can cause an excess of nutrients in surface water. This eutrophication also takes place on land. Plants that thrive on manure-rich soils, such as nettles, among others, gain the upper hand while plants that grow on lean soils disappear. Also, the nitrate created from ammonia can pollute the groundwater.

Urea is converted to ammonium by urease. Thus, as urine contains more urea, more conversion to ammonium is possible. The ammonium formed is in equilibrium with ammonia in slurry. This balance depends on the acidity, pH, of this manure. The ammonia can volatilize from the manure as ammonia gas. As the pH in the solution increases, the process of ammonia formation will be more pronounced and vice versa.

The degree of volatilization also depends on the difference of the concentration of ammonia in the air directly above the manure and the concentration of ammonia in the slurry. If there is a lot of air exchange directly above the manure, more ammonia will escape. The formation of ammonium, NH₄, is also dependent on temperature. The current and common mixing of manure and urine, as slurry in manure cellars, not only leads to excessive ammonia formation and as a result to volatilization and the very undesirable nitrogen deposition to the environment, but in addition, hydrocyanic acid gas and nitrous oxide can also be formed.

More than 50% of the ammonia emissions that occur in the Netherlands come from agriculture and, more specifically, livestock. The ammonia escapes from the stables or enters the air as a form of nitrogen fertilization of the land, even where this is not socially intended or desirable.

Both the individual aspects and the correlation between a sustained resistance to dynamic and static mechanical loads, thermal and chemical resistance and liquid-tightness are limited or restricted by, among other things, ammonia formation in the common and known liquid- and/or substance-tight floor, basement, and base arrangements.

This limitation or restriction can be expressed, among other things, structurally in crack formation, crumbling, subsidence, creep, detachment, deformation, wear and decomposition of the materials used as a result of damage to the liquids and/or substances collected, or forces exerted on them by vehicles driving up or over or by installations placed on them or, for example, by stable animals staying on them during use.

The limitation or restriction may be environmentally manifested by, among other things, contamination of soil and groundwater, animal slippage on an excessively slippery surface, or the permanent formation of ammonia and nitrate or nitrogen deposits to the environment, primarily as a result of the mixing of manure and urine in a slurry pit environment and open walking floor or manure corridor when keeping stable animals or livestock.

The formation of ammonia by mixing manure and urine is the major problem in reducing and controlling the air quality in (livestock) stables and the deposition outside the stable environment.

In recent decades, at the insistence of the national government and legislation in this area, the Dutch livestock sector has made many efforts to reduce the environmental burden caused by ammonia emissions. This mainly concerned effect-oriented measures, for example in the form of air treatment equipment, such as gas scrubbers, which remove ammonia gas from the ambient air. To offer sufficient protection to the vulnerable, nitrogen-sensitive nature, even more efforts will be required from the livestock sector in the coming years.

In agriculture and specifically in cattle breeding, separation at the source of manure as a solid substance and urine as a liquid has become an extremely important issue. Political and legal positions, case law and regulations form the basis for mandatory separation of manure and urine. This has led to various solution approaches to separate manure and urine at the source, i.e. into a solid component and a liquid component, using hard but also soft permeable soils.

Dutch patent NL1037035, for example, discloses a stable floor composed of a moisture-permeable drain bed, for example of rubber, plastic or stone granules, situated on a moisture-permeable resilient layer, such as hole mats of rubber or plastic.

Dutch patent application NL9200455 describes a stable floor covering consisting of fiber material applied to liquid-permeable carrier elements made of, for example, rubber or plastic.

It has been found that a softer walking area than a conventional concrete floor or a concrete surface with rubber mats does not have the desired effect and is often even counterproductive as far as ammonia formation is concerned.

Deposits to the outside area are, from a legislative and regulatory point of view, increasingly a non-issue. If an ammonia-producing farm with inadequate or uncontrolled emissions or dispersion is located in the vicinity of certain nature reserves, where the ammonia deposition is restricted from a general social point of view and/or by laws and regulations, a farm is often left with no other option than to stop its entire operational activities related to the ammonia formation at the site.

Initiatives related to source-oriented measures as known from the state of the art do not get off the ground sufficiently in practice or have failed. A single innovative design even describes as part of the solution to permanently pasture the cattle outside the stable, allowing the principle of separating urine and manure to take place in a way that is natural for the cattle.

It is well known that an animal never urinates or drops manure at the same time. An animal in a pasture environment is on the move and does not stay in one place for long. The places where manure and urine are released in a pasture environment are therefore separated, so that the basic situation of separation at the source is automatically met. In practice, however, animals will not be able to stay outside in a pasture all year round.

Traditionally, most stables and cubicle stables have a manure corridor where a grid system allows the manure to pass through and be collected as slurry. From frequent journalistic and political publications and reports anno 2020, including a three-year study by the Dutch Central Planning Bureau (CPB), there are over 16,000 livestock farms in the Netherlands anno 2020, of which approximately 20% have a facility designed to separate manure at the source. In some cases, however, the effect of such a facility is relatively worse in terms of ammonia formation in a stable than the original situation of a traditional manure corridor.

Measures to be taken based on investment failures, under the influence of European and national laws and regulations and based on results achieved, concern partly a remediation of the livestock and partly sustainability of operational activities in terms of ammonia formation.

Anno 2020, in a livestock stable and an animal's living environment, on a practical scale, there has been virtually no success in completely separating urine and manure at the source and, therefore, in source-focused reduction of ammonia formation from manure and urine.

Conventional slatted floor facilities are not sufficient in practice because these facilities are designed to discharge solid substances and liquids as a liquid/substance mixture as a whole to a collection unit for further processing.

### Summary

A first aspect underlying this application is the task to provide a floor and a cleaning arrangement aimed at reducing and preventing, as much as possible, undesirable environmental pollution of the surroundings, i.e. the ambient air, the soil and the (ground) water under and in the vicinity of the floor.

The present application provides for this purpose a floor comprising a load-bearing liquid-tight surface and a cleaning arrangement for collecting liquid and solid substances applied at the load-bearing surface of the floor during use, wherein the cleaning arrangement comprises a liquid collection arrangement situated sideways of the floor to which the load-bearing surface of the floor connects by a down slope for collecting liquid applied at the load-bearing surface of the floor, a spraying system arranged for applying a cleaning liquid at the load-bearing surface of the floor, and a cleaning unit that is independently moveable over the load-bearing surface of the floor and having a rinse-slide-suction facility and a container for collecting solid substances applied at the load-bearing surface of the floor, wherein the load-bearing surface of the floor comprises a liquid-tight layer of Polycarbonate/Acrylonitrile Butadiene Styrene, PC/ABS, the cleaning arrangement comprises a further spraying system arranged for applying a cleaning liquid at the load-bearing surface of the floor, and the moveable cleaning unit comprises a further suction facility for collecting cleaning liquid applied at the load-bearing surface of the floor.

The combination of arrangements and facilities as proposed by the present application allows liquids and solid substances that end up at the liquid-tight floor to be collected separately by the nature of their appearance, and to dispose of separately for further processing.

The use of PC/ABS as the load-bearing surface provides a floor which, in terms of its constructional shape, hardness, density, strength, stiffness, impact resistance, coefficient of thermal expansion, chemical resistance, adhesion of additional materials and finishing, can be suitably dimensioned for a versatile range of applications. Including, but not limited to, support of relatively heavy dynamic, static, mechanical, and biological loads in the broadest sense and which, moreover, is resistant to be loaded with a multitude of chemical or biological liquids, such as urine, and solid substances, such as animal manure, as well as temperature influences, in particular loads that occur when keeping stable animals or cattle in a stable facility.

Separate collection of liquids and solid substances is achieved by means of the single or multiple down slope of the liquid-tight floor, as a result of which liquids drain to the liquid collection arrangement near the lowest part of the floor and the solid substances remain on the floor.

For the discharge of solid substances remaining on the floor, such as manure when used in a stable environment, the present application provides for a self-contained cleaning unit, that is a cleaning unit that automatically, independently, or autonomously moves over the load-bearing surface of the floor, having a rinse-slide-suction facility and a container for collecting solid substances deposited on the load-bearing surface of the floor.

The liquids collected in the lowest area of the liquid-tight floor may be collected here in a pump tank, gutter facility or similar facility intended and placed for this purpose. For example, the liquids may be pumped from the pump tank or discharged through a siphon to a designated external liquid-tight collection unit or container, preferably closed to the environment.

In order to prevent stagnation of liquids in the liquid collection arrangement, among other things, it may be provided that the spraying system is attached to a constructional boundary of the liquid-tight floor near the liquid collection arrangement, for example in the form of a pressure pipe having nozzles which periodically spray under pressure and force a short or higher quantity of water or for example water containing a urease inhibitor such as peroxide or acetic acid from the nozzles. Such that this cleaning liquid rinses over the floor and, as such, flushes away impurities and stagnations in the free runoff area. This keeps the floor drain free of impurities and the liquids may continue to collect freely in the liquid collection arrangement and can be extracted and disposed of. In the process, the urease inhibitor also inhibits the primary reaction with urea and thus the formation of ammonia.

To protect such a pressure pipe and nozzles from any deposition of manure or other substances falling from above in a stable environment, which may cause blockage, the pressure pipe may be provided with a cover along its entire length in the form of a plank- or plate-shaped unit or body.

Such a plank- or plate-shaped body is attached, on the one hand, liquid-tightly to the structural upright edge of, for example, a cubicle stable environment or a sill or barrier boundary of the liquid-tight arrangement and rests, on the opposite side of this plank- or plate-shaped body, on lugs available below the edge of the plank- or plate-shaped body, on the liquid-tight floor. The plank- or plate-shaped body thus forms a canopy over the pressure pipe and the liquid collection arrangement.

The interface of the plank- or plate-shaped body to the liquid-tight floor is constructed in such a way that a gap is left open here so that liquids can, on the one hand, rinse from the nozzles, through the gap space, over the floor and, on the other hand, under the influence of a down slope and gravity, run off unhindered to the lowest area of the liquid-tight arrangement and back through the gap space into the liquid collection arrangement.

The times of operation of the spraying system and the amount of cleaning liquid applied may depend, among other things, on the specific use of the load-bearing surface and the degree of soiling thereon.

As already described, the solid substances remaining on the floor arrangement are picked up with the cleaning unit that independently moves over the load-bearing surface of the floor, such as for example a mobile robot, equipped with a rinse-slide-suction facility and container, and that are deposited directly or indirectly from time to time, when the container is full, in a solid substances collection basin closed off to the environment.

The sliding function of the mobile cleaning unit collects solid substances on the floor which are then moved to the container of the cleaning unit by means of the rinsing and suction facility, so that the liquid-tight floor, after the cleaning unit has passed, remains relatively clean. In practice, the cleaning unit or robot is in operation almost continuously.

However, it has been found that when using such a cleaning unit, in a stable environment, urine and manure residues can still remain on the floor to a certain extent, leading to a manure film and undesirable ammonia formation and the like.

To solve this problem, the present application additionally provides for a further spraying system of the cleaning arrangement, for the application of cleaning liquid at the floor and a further suction facility of the cleaning unit that is independently moveable over the load-bearing surface of the floor.

The cleaning liquid from the further spraying system may again consist of water or, in a further embodiment, may contain urease inhibitors as additional additives, such as peroxide or acetic acid.

That is, the primary cleaning process of the moveable cleaning unit by means of taking up solid substances and residual puddles with its rinse-slide-suction facility is, in accordance with the present application, extended to include a post-rinse and post-cleaning with, for example, a urease-inhibiting liquid which is applied at the floor by means of a nozzle or sprayer through the further spray system, after which the further suction facility of the cleaning unit, for example constructed as a water suction unit, post-cleanses the floor in a way that no sediment, sludge or slurry film remains. The urease-inhibiting cleaning liquid lowers the pH due to its acidity and thus additionally levels the process of ammonia formation. This embodiment is particularly suitable for use in a stable environment, where the manure film can be collected on a stable floor separately from the solid substances, i.e. the manure.

This additional cleaning effectively removes all residues and liquids, such as urine and residual organic material, remaining on the load-bearing surface of the floor, leaving a particularly clean surface. In a stable environment, manure which is afterwards deposited on this clean surface cannot react with residual urine, such that there is no undesired ammonia formation or any other environmental impact.

With the solution according to the present application, an almost complete separation of liquids and solid substances can be achieved at the source, for example, for application in a stable environment where manure and urine must be separated at the source to prevent the formation of ammonia.

Although the cleaning liquid for post-cleaning or post-spraying can be collected with the solid substances in the container of the mobile cleaning unit, the mobile cleaning unit can of course also be provided with a further container to which only the further suction facility connects, for the collection of organic residues and cleaning liquid sucked up from the floor.

In a further embodiment of the moveable cleaning unit according to the present application, it is provided that the further suction facility of the cleaning unit that is moveable over the load-bearing surface of the floor is located behind the rinse-slide-suction facility of the cleaning unit viewed in its direction of movement, for the collection of organic residues and cleaning liquid.

This positioning of the further suction facility allows for an effective and thorough cleaning of the floor, without interfering inconveniently with the operation of the rinse-slide-suction facility for picking up solid substances. In the case of a stable environment, this achieves such a thorough cleaning that the floor can be provided almost completely free of urine and manure and the aforementioned manure film during use.

The further spraying system for post-cleaning may itself be part of the primary spraying system discussed above, but may also be applied as an independent additional spraying system at a constructional boundary or other constructive provision of the liquid-tight floor, for example also in the form of a pressure pipe with nozzles, with which, for example, periodically under pressure and force a short or higher quantity of water or for example water containing a urease inhibitor such as peroxide or acetic acid is sprayed from the nozzles, in such a way that this cleaning liquid is rinsed over the floor and can be collected by the further suction facility of the moveable cleaning unit

In a yet further embodiment, the present application provides that the further suction facility of the cleaning unit that is moveable over the load-bearing surface of the floor connects to a further container of the cleaning unit for the collection of organic residues and cleaning liquid present on the floor during use.

In a still further embodiment of the present application, the cleaning unit that is moveable over the load-bearing surface of the floor comprises a liquid reservoir for cleaning liquid, such as a urease-inhibiting liquid, such as for example water with an addition of peroxide or acetic acid, having at least one nozzle connected thereto, arranged for applying cleaning liquid at the load-bearing surface of the floor during use.

That is, the further spraying system is now located on the moveable cleaning unit. This form of implementation is particularly suitable for use in a stable environment where the manure film on a stable floor can be collected separately from the solid substances, i.e. the manure.

It will be appreciated that, on the one hand, the spraying system of the cleaning arrangement can be realized separately, permanently attached to a floor arrangement in order to maintain the supply of liquid to the liquid collection arrangement and, by means of an added urease inhibitor, can counteract the process of ammonia on the floor field and that, on the other hand, in or on the moveable cleaning unit a further spraying system is operative which, in combination with the primary collecting function of solid substances of the mobile cleaning unit, has for its object to further spray completely clean, sucking up and absorbing the organic fractions of the residual manure film, so that a completely clean surface remains.

A combination of a fixed further spraying system and a moveable further spraying system may also be part of an embodiment according to the present application.

The normal individual biological behavior of animals in the deposition of urine and manure implies that deposition thereof occurs sequentially. In other words, when urine is released from an animal, manure is not released simultaneously and vice versa. More specifically, this implies that due to this sequentiality and the natural ongoing movement of an animal in the living space in which it is located, the physical place where the deposition of the urine ends up on a substrate is, in almost all cases, a different physical place on the load-bearing substrate, than the deposition of the manure.

In the time between the deposition of urine and manure on the floor, according to the present application, the urine under the influence of the down slope can already flow away and residual urine will be effectively removed from the floor by the additional cleaning before manure is deposited again, or conversely, the manure will already be effectively removed by the cleaning unit that is moving over the floor and the additional cleaning, before urine is deposited again.

A drainage point at a liquid-tight arrangement for the purpose of industrial cleaning includes, for example, a container-like collection unit in which, under the influence of the down slope and gravity, the mixed liquids flow off as liquid sludge or sediment and collect in the collection unit. Depending on the applied operational management, the liquids and solid substances which end up on the surface of the load-bearing liquid-tight floor during industrial cleaning, not being a stable application, can also be directed together to a designated disposal point or disposal area for further processing.

In an industrial environment, an underground collection unit is often placed in the area of structurally constructed liquid-tight facilities. These underground collection units are often made of concrete and have the function of a sludge trap and gravity separator, where sludge, water and oils or greases are separated under the influence of sedimentation and floatation.

In agriculture, such a collection unit is often implemented as an architectural basement that serves as a bulk collection of slurry in a livestock or stable environment. In this case, the disposal of slurry is carried out by mechanical suction by industrial machines that are also equipped for spreading to an agricultural land environment, with the aim of fertilizing the soil for the subsequent production of pasture or arable products.

The relatively light weight of the floor in the present application, while maintaining, on the one hand, strength properties with applicability for the heavier traffic classes and, on the other hand, chemical resistance to numerous industrial and biological liquids and solid substances, makes the liquid-tight floor according to the present invention suitable for many applications in a commercial environment where, in the normal course of operation, liquids and solid substances are released which may be harmful to the physical environment, soil, groundwater and air.

More specifically, this concerns the collection, drainage and routing to a sludge trap and separator, or separate collection of liquids and solid substances with individual processing, of industrial liquids, solid substances, wash water, chemical liquids, alkalis, acids, mineral oils, fuels, and the like deposited on the liquid-tight floor arrangement. This usually concerns operational activities in which usually also heavier and lighter dynamic and static mechanical loads occur in the form of vehicles, axle and wheel loads and other installations.

Examples of such operational categories where a PC/ABS floor as described in the present application may find application include chemical cleaners and chemical companies for the collection and disposal of process water and spills, the truck and car washes mentioned earlier, facilities for refueling and cleaning vehicles and aircraft, the transportation industry, agriculture for the collection and disposal of crop protection products, airport facilities for clearing ice, de-icing, of aircraft wings, rail transportation, bus companies, coach companies, and many other applications.

In an embodiment, the PC/ABS of the floor according to the present application possesses a coefficient of thermal expansion less than 5.0 10⁻⁵ cm/cm/°C in a range of at least -20 °C to +80 °C, in particular a mineral-filled PC/ABS of the design type XZ92720.00 or corresponding type designation. This type of PC/ABS is commercially available from the company TRINSEO^{™}.

The properties of the PC/ABS blend are affected by the ratio of polycarbonate, PC, and acrylonitrile butadiene styrene, ABS. The higher the percentage of polycarbonate, the higher the heat resistance of PC/ABS. In addition, the choice of ABS essentially determines the final properties of an end product manufactured with PC/ABS, particularly with respect to the percentage and particle size of butadiene in ABS. PC/ABS of design type XZ92720.00 includes a mix of properties including low emission and odor, low gloss, purity of product, batch to batch consistency, excellent balance between flow and physical properties, high thermal stability, excellent adhesion to other materials and the basic color of the product is gray/white natural.

In a further aspect, according to the present application, the load-bearing surface of the floor comprises an anti-slip layer attached to the PC/ABS.

The excellent adhesive properties of PC/ABS allow the load-bearing surface of the floor to be provided with such a good adhering anti-slip layer, that the floor retains its intended properties to a great extent during its service life when subjected to loads from traffic driving up and over the floor and over or persons or animals walking over the floor, in combination with a wet surface as a result of flushing, spraying, spilling or deposition of liquids, sludge, manure, urine and solid substances. A good and strong adhesion of the anti-slip coating to the PC/ABS significantly increases the safety of people, vehicles, machines, and animals, and without adversely affecting the desired properties of the floor for separate collection of liquids and solid substances.

In practice, such an anti-slip layer may include what is known as a lean distribution of fine gravel, fine crushed stone, fine gravel grains and/or fine metal particles embedded in a polyurethane coating. The quantity of grains and/or particles and the grain/particle size can be tailored to the desired anti-slip effect. The use of a polyurethane coating or varnish further limits the sensitivity of the panels to ultraviolet, UV, light incident on the load-bearing surface.

The excellent adhesiveness of PC/ABS further allows individual floor panels to be joined liquid-tightly to each other and to the surrounding building components by means of a resistant joint sealant. A sealant suitable for this purpose is, for example, commercially available under the product name SABA Ecoseal AC or SABA Ecoseal Bio HM.

The mechanical and physical properties of the PC/ABS thermoplastic polymer in the present application allow for the construction of a liquid-tight floor that includes an all-PC/ABS panel or a number of liquid-tight interconnected all-PC/ABS panels, such as the mineral-filled PC/ABS described above.

The PC/ABS in the present application enables a form and end product in which the absorbed forces may be greater than in common products and applications in similar or other forms, in line with the requirements of strength, stiffness, thermal resistance, adhesion to other materials, formability, coefficient of thermal expansion and the like, and thus to an entirely new application in an industrial or agricultural and livestock environment.

In a still further embodiment, the panel according to the present application has a three-dimensional channel plate shape, with a further surface located at a distance from the load-bearing surface, which surfaces form channels between the surfaces by connecting strips located transversely thereto. In particular wherein the panel has an extruded channel plate shape.

The application of PC/ABS or mineral-filled PC/ABS according to the present application allows for a production process in which, for example by means of extrusion, a three-dimensional structural shape is given to the product, the properties of which, in addition to a small coefficient of thermal expansion and the adhesion, provide a nominal strength and stiffness to the end product, partly due to the nature and composition of the starting material and the formed three-dimensional structure. In this way, a constructively strong product can be made with a relatively little amount of material.

The three-dimensional structure may comprise of rectangular or hexagonal shapes bounded by plate-shaped connecting strips transverse to and between the opposing surfaces, to which the term 'channel plate' or 'channel plate shape' may be attributed. When interconnected, such a channel plate shape leads, for example, to a type of 'honeycomb' structure, lattice structure or similar. Such a shape, because of its homogeneous structural pattern and relationship between the individual hexagonal shapes, can absorb very large forces and withstand force loads, without affecting the structural shape as such. In numerous industrial applications, these lightweight and strong structural forms can find application, such as, for example, in walls of aircraft or blades of windmills, truck bottoms or generally bottoms that require high load-bearing capacity, and the like.

The channel plate structure, such as for example a honeycomb structure or lattice structure, may be manufactured by using an extrusion process and an extrusion mold or production mold specially designed for this purpose, in one pass, to produce a channel plate structure for many, special or heavily loaded applications. This is a generally continuous production process, in which it is novel in the present application, on the one hand, that this process is carried out with a PC/ABS thermoplastic polymer with its excellent properties of adhesion with other materials and low coefficient of thermal expansion, and on the other hand, enables a structural shape and geometric size, which are not currently manufactured in present industrial processes. The production mold or extrusion mold of the extrusion machine producing such a channel plate can be a factor of 4 to 6 larger than, for example, for the manufacture of channel plates made of, for example, polycarbonate.

The extrusion mold has a template that aims to produce a channel plate in which the shape, composition and interconnection of the individual strips that make up the channel plate are selected in such a way as to achieve an optimum in ratio of strength, production cost and material quantity.

Individual liquid-tight panels or channel plates can be placed adjacent to each other on location and can be liquid-tightly connected to each other as well as to a constructional environment by means of a joint sealant which adheres well to the PC/ABS and is (liquid-)resistant and possibly an additional tongue-and-groove connection, a welded connection or mechanical connections which are suitable for the intended use, in such a way that a liquid-tight floor arrangement is provided which is gas- and/or liquid-tight. Such a liquid-tight floor arrangement is also portable by releasing the welded joint or mechanical joint without the individual liquid-tight panels losing their original shape or composition.

In an embodiment, coupling means are provided in the panels at a distance from and in an area along at least one circumferential edge thereof and fixedly connected in a panel and made accessible from the load-bearing surface with coupling elements, such as, for example, threaded bushings, bayonet connecting bushings and similar coupling bushings, for coupling into these bushings fasteners that are preferably detachably.

This makes it possible to connect adjacent panels further mechanically by means of coupling strips and screws or otherwise by connecting opposite coupling bushes. The coupling bushes or coupling elements can also be used for attaching sills and uprights to a panel, for example for a roofing, a screen wall or similar.

In addition, support elements for a screen wall or the like to be connected to the coupling means and a ramp to be installed, if any, preferably extending along a circumferential edge of choice of a respective panel may be provided.

By detachably connecting lifting hooks to the further coupling elements, such as threaded sleeves and bayonet connecting sleeves, panels can be easily lifted and placed in the desired position, and of course on and off vehicles or in sea containers, for transporting the panels.

The PC/ABS floor according to the present application is suitable for various applications where there is a legal requirement to use an independently (approved) liquid-tight facility for operational activities characterized as having 'an increased or high soil risk'.

In addition, the PC/ABS floor described in the present application is particularly suitable as a substitute or alternative for certain hitherto common floor solutions. An example of this is a bicycle path, for which it is customary to implement this in concrete, asphalt, concrete elements or as a shell path. The disadvantages of these commonly used products are related to the CO₂ emissions and emissions of concrete and asphalt or, in the case of shell paths, to the extraction of shells, which is restricted for environmental reasons.

Because the floor according to the present application is light in weight and mechanically strong, a relatively light foundation compared to concrete or asphalt will suffice. This also means that, for example, a bicycle path with the floor system proposed in the present application in the form of floor sections to be connected or joined, can also be constructed very quickly and can also be advantageous in less physically demanding or load-bearing areas.

The relatively low dead weight of the floor provision has a beneficial effect in sizing a foundation for future use. The coloration of an anti-slip layer in, for example, red, fluorescent yellow, baffle colors or combinations of colors or ivory color and texture as a substitute for a shell path is also possible, for example. In addition, such a bike path is also suitable for the driving over it, for example, of a fire truck or an ambulance, which may occur in a nature reserve.

Other application examples of light weight floor facilities with high strength and stiffness include parking roofs, parking decks or lot paths. Commonly, parking roofs are often provided with concrete tiles or elements made of concrete, which is a relatively heavy load for a roof or structural arrangement. A floor made of PC/ABS according to the present application is light, strong and can be provided with a good adhering anti-slip layer and partly because of this it is safely suitable for such applications.

The floor according to the present application can be manufactured singly or as a composite floor system of individual floor panels to size, such that the floor can be laid, for example, barrel round. By means of a tongue and groove connection, an adhesive sealant or welded joints, individual floor plates or floor panels are brought together to form a liquid-tight floor.

The thermoplastic PC/ABS polymer floor according to the present application is 99% recyclable, for the repeated remanufacturing of any thermoplastic form such as a channel plate or panel for a liquid-tight floor arrangement, while retaining all the properties already described, and thus ideally meets the principles of a circular economy.

In an embodiment, the present application further provides that the floor comprises a panel made of fiber reinforced plastic composite, on which a liquid-tight layer of PC/ABS forming the load-bearing surface is applied.

Such a liquid-tight floor or base arrangement of PC/ABS as the load-bearing surface on a support of fiber-reinforced plastic composite may also be constructed as an integrated structure in the form of a channel plate, in a hexagonal form or similar structural form. If necessary, with a multi-sided enclosing plastic skin, such as a single or multi-layer adhesive PC/ABS polymer or fiberglass skin, epoxy, polyurea or polyurethane or similar adhesive plastics and which is, on the one hand, relatively light in weight and, on the other hand, suitable for heavier traffic loads of traffic class 600 (20 tons axle load) or lighter.

In a particularly advantageous application of the floor and cleaning arrangement according to the present application, same is part of an arrangement for keeping stable animals, such as a stable environment for various types of animals or livestock, including cows, pigs, horses, sheep, and similar animals.

The task that lies at the heart of the stable environment today is to reduce or completely prevent the formation of ammonia and the resulting nitrogen deposition. As described above, this requires the separation of manure and urine at the source.

Among others, the good strength, stiffness, abrasion resistance, resistance to chemical (liquid) substances, manure and urine, the small coefficient of thermal expansion and good adhesion of additional materials such as an anti-slip layer, as well as the manufacturability by extrusion of, for example, mineral-filled PC/ABS panels according to the present application have already been described above. These properties, among others, make it possible to separate liquids (urine) and solid substances (manure) at the source in a stable environment.

In general, in a stable environment, a floor will be required consisting of an integrated, structural composition of a number of three-dimensionally shaped (floor) panels, for example rectangular panels, for example with an overall length-to-width ratio of approximately 2:1, each in a channel plate shape, which are interconnected liquid-tightly to form a liquid-tight, closed load-bearing surface for use, having a strength of, for example, about 2.5 N/mm², on which animals may reside, and comprises a liquid collection arrangement accessible to liquid from the load-bearing surface, located laterally from the floor, to which the load-bearing surface of the floor is down sloped to connect for collecting liquid spilled on the load-bearing surface of the floor. Requested dimensions of a panel may be, for example, a length of 1900 mm x a width of the manure corridor x the panel thickness of 50 mm. For this, the present application provides an excellent solution.

If desired, each panel may be provided with a liquid collection barrier extending along a circumferential edge of the panel and affixed at or adjacent to the load-bearing surface on the panel. The spraying system and/or further spraying system may also be located at or adjacent to such a liquid barrier in the form of the pressure pipe with nozzles as discussed above.

For liquid-tightly connecting panels, each panel may be provided with a joint space along one or more circumferential edges for the application and incorporation therein of an adhesive, liquid-resistant joint sealant or weld, such that for adjacent connected panels, the joint space of one panel is congruent with the joint space of another panel.

The functions and means for adjoining panels and the functions and means for liquid-tightness and liquid collection and disposal may be fully integrated.

The term liquid-tight as used and referred to in the present description and claims and as also defined and referred to in the prevailing national and international legislation in the field of Environmental Management and Soil Protection, means that no liquid may reach from the load-bearing surface of the liquid-tight floor or base arrangement, i.e. the surface used for (operational) activities, may reach the unloaded surface of the liquid-tight floor or base arrangement, i.e. the surface of the floor or base arrangement resting on or above a substrate and located on the opposite side of the load-bearing surface or external to the load-bearing surface.

Due to the integration of the connection functions and the liquid collection and discharge system, the liquid collection and discharge system is also considered gas and liquid-tight within the meaning of the above definition.

In an average stable environment, it has already been described that there is nominally a slatted floor as a manure corridor and below that a liquid-tight manure pit.

The present application provides an embodiment for keeping stable animals wherein the floor above a manure pit or manure pit is constructed, for example, of panels having a three-dimensional channel plate shape according to the present application and such that the floor seals the manure pit or manure pit against leaks to the environment gas- and liquid-tight.

That is, in this embodiment, the manure corridor is covered or roofed over its full width and length by the PC/ABS floor. In an environment, for example, prepared in advance for the installation and joining to the building components, the individual panels are laid side by side and assembled into a single continuous floor.

By connecting the individual panels to each other and to the surrounding building parts with a resistant jointing sealant, a gas- and liquid-tight floor system is formed over the entire manure corridor that completely seals off the underlying slurry pit from the environment.

The first environmental gain lies in the fact that the process of ammonia formation present in the slurry pit no longer affects the stable or further surroundings outside the pit.

In the case of adjacent liquid-tightly coupled panels, liquid will drain from the load-bearing surface over the interconnected adjacent floor panels to the liquid collection arrangement.

Because the liquid- and/or substance-tight floor can also be connected completely liquid-tight to the structural environment, urine will also not leak into the environment outside the floor but will be discharged in a controlled manner via the liquid collection arrangement located to the side of the floor.

This means that on the relatively clean and smooth load-bearing surface of the floor according to the present application, urine under the influence of the down slope present in the floor and the force of gravity will immediately run off sideways, to the lowest area of the floor and that solid substances, such as manure, will remain on the floor. Because of the prevention of ammonia formation on the floor, separate collection and disposal of urine and manure should be provided.

To allow as much liquid as possible to drain from the load-bearing surface of a panel to the liquid collection arrangement, an embodiment of the application provides that the load-bearing surface of the floor has a down slope or curvature to at least one side thereof, for forming a single or multiple down slope, in particular a spherical segmental curvature.

That is, in the case of a single down slope, one of the circumferential edges of a panel is lower than the other circumferential edges thereof, such that under the influence of the down slope thus formed and gravity, liquids flow away from the load-bearing surface. In the case of a multiple down slope, several circumferential edges of a panel are lower than the other circumferential edges thereof, so that multiple down slopes are formed and liquids flow off vector-wise to the lowest area at the lowest point of the entire floor arrangement.

For a two-sided down slope of a curved panel, the opposite circumferential edges are both relatively lower than the center of the floor panel, viewed along the other circumferential edges.

It may further be provided that circumferential edges of a panel with multiple down slopes, such as a spherically curved panel, comprises an integrated liquid barrier or upstanding edge, such as a sill, installed in or on the panel, relative to the load-bearing surface. This limits the flow of liquid from the liquid-tight floor to the lowest points or areas of a floor arrangement to prevent uncontrolled leakage outside the liquid-tight arrangement.

When the mixing of solid substances and liquids is permitted, i.e. does not form undesirable gases or vapors, the (vacuum) suction function or suction facility of the rinse-slide-suction facility and/or the further suction facility can also be replaced by a cyclonic function, of which the technical processing unit picks up the dirt because of the negative pressure generated by the cyclonic action above the floor surface. Different from the operation of a vacuum pump, a very powerful negative pressure is generated in this way, as a result of which the solid substances and liquids are completely absorbed and deposited in the container or containers of the moveable cleaning unit.

The absorption capacity of solid substances and liquids of this cyclonic technology is more effective compared to sliding and vacuum suction. The liquid-tight floor arrangement is completely cleared of any solid substances and liquids present by this cyclonic technology. The result of the use of a cyclonic absorption device therefore provides a clean liquid-tight arrangement where solid substances and liquids are completely removed.

In an embodiment, the present application provides that the cleaning arrangement comprises a collection unit that is closed to the environment and the liquid collection arrangement includes a vacuum suction or pumping system, arranged for transferring liquids collected by the liquid collection arrangement to the collection unit during operation.

The collection unit closed to the environment may take the form of a pump tank or gutter system having an integrated internal down slope to the lowest point and connected to the liquid collection arrangement. The inflow into a pump tank or gutter system of liquids and possibly sediment and sludge or other solid substances will take place at the relatively lowest point with respect to a liquid-tight arrangement connected thereto.

Because of the position of the liquid-tight floor system in relation to its discharge point, a pump tank will have a relatively low inflow height in relation to the position of the liquid-tight floor system and its surroundings, whereby liquids can still flow freely into the pump tank. The stroke space that a pump has available for pumping, between the height of an inflowing liquid level and the bottom of the pump tank, can be relatively small in practice.

To convey liquids and possibly sediment in mass from the pump tank to a sludge trap/separator, a vacuum suction or pumping system is provided, as a dirty water pump without rotating parts and with sufficient space in the pump housing to allow sediment and coarser parts to pass through. This vacuum suction or pumping system is advantageously based on the venturi principle.

The operation of the venturi is based on producing a negative pressure inside the enclosure of the pump, the pump housing, by forcing water under relatively high pressure through a permanently mounted nozzle or spray nozzle in the pump housing and discharging it in the discharge direction of the pump.

The shape of the pump housing is based on the flow properties of liquids according to the principle of physics that an increase in the velocity of a liquid or gas is accompanied by a decrease in pressure. The increase in velocity is obtained by forcing water at high pressure past a narrowing, the venturi, into the pump housing.

The negative pressure obtained in the pump housing seeks to compensate for the outflow energy by propelling liquid/sludge present in the discharge direction. The increase in velocity of the liquid in the discharge direction makes a relatively large flow rate to be propelled in the discharge direction.

The capacity of the Venturi pump is so large that the pump tank, due to the relatively small pump stroke, will be emptied fairly quickly, which means that the Venturi pump will then simultaneously lose its function because the pump will suck in atmospheric air and then shut down.

Because during operation over time sufficient liquid is fed into the pump tank, the pump housing will once again be completely under the liquid level in the pump tank and after activation of the pump, for example through a level switch in or on the pump tank, can be put back into operation. The discharged flow rate is continuously compensated so that the venturi action remains active for the life of the pump.

Since the pump housing of the Venturi pump allows sufficient space for liquid, sediment, and coarser particles to pass through and because there are no rotating parts, there will be no stagnation in the discharge of liquid possibly with sediment and possibly with coarse particles to, for example, a sludge trap/separator. Because the high-pressure unit maintains the negative pressure in the pump housing, the liquid present and any sediment will be propelled and pumped through a hose into the sludge trap/separator. A system of discharge pipes is no longer necessary, thus preventing any stagnation in the discharge pipes and the like due to sludge or dirt accumulation therein.

The negative pressure in the housing of the venturi pump can be obtained by connecting a high-pressure water system to the housing of the venturi pump. As an example, a plunger pump unit of about 14 I/min and an operating pressure of about 140 bar would work. The pump housing can be equipped with a connection for a high-pressure line, according to generally accepted practice, as known in the prior art.

For perfect positioning and absorption of unevenness in a ground surface, the panels can also be supported as a whole under the predetermined single or multiple down slope. The support can consist of a sand substrate, but in a stable environment or paved ground, the support can consist of, for example, a profiled bonded foundation to transmit sufficient pressure from the floor panels placed on it to the ground surface.

In a spherical and possibly cantilevered construction, the panels are or will then be placed in a manner in which opposite circumferential edges, along the full length of a circumferential edge, rest on a ground surface. The spherical floor panels may also be placed on a rigid fully load-bearing substructure or ground surface.

In a further embodiment, a method is provided for the manufacture of a load-bearing pressure bed suitable for the laying of a floor comprised of floor panels and comprising the steps of installing a supporting frame whose dimensions and contour correspond to the dimensions, profile, down slope and contour of the floor arrangement to be manufactured and with a frame height at least equal to the height required to level unevennesses in the ground surface or pavement and to obtain a desired down slope or gradient in the floor arrangement, whereby the frame fully supports the floor arrangement and can fully bear the dynamic and static mechanical loads of driving traffic and livestock over the arrangement.

The present application offers not only a technical but also an economic improvement over conventional facilities by using the described durable and lightweight PC/ABS that can be manufactured in a continuous extrusion production and, if necessary, plastic composite materials.

Implicitly, the stipulated requirements for foundations of the arrangement become relatively simpler. In addition, there are large and structural savings to be made in, among others, transportation, processing, maintenance, or repair, economic or technical depreciation, and the floor according to the present application is structurally distinctive and more favorable than conventional facilities.

The design can take place according to the cradle-to-cradle principle and is repeatedly recyclable.

The design and composition of the entire liquid collection and drainage system can be implemented in such a way that installations, utilities, and piping can be placed at, on, in or near the collection system above ground or can be taken up or dismantled again. This design, composition and properties make it relatively easy to relocate the entire collection and drainage system to any other location while retaining its shape and function.

The invention makes it possible that operational activities involving liquids hazardous to the soil can take place safely and in accordance with the regulations on or above liquid-tight collection facilities, whereby one can think of released (liquid) substances as a result of chemical loading, manure, urine, mineral oils or fuels and the like and the cleaning and washing but also the refueling, filling and draining of motor liquids such as engine oil, cooling liquid or windscreen washer liquid, or the storage and transfer of acids or alkalis and other oxidizing or chemical liquids and substances, whereby it is economically advantageous to construct a moveable, lightweight, durable and resistant liquid- and/or substance-tight floor arrangement. This liquid-tight arrangement is also permanently suitable for driving over, walking over, or placing heavy and light animals or objects on it, or can be driven over by heavy or light axle loads.

The floor with cleaning arrangement complies integrally and distinctively with the currently applicable requirements, provisions, and standards, including NEN-, Euro-and CUR-standards for dynamic, static, mechanical, thermal and chemical resistance, while retaining the functions of liquid and/or substance tightness. A distinctive feature is that the composition of each panel may comprise a heavy load-bearing structure without de-lamination risks known from traditional constructions.

The present invention describes a system of liquid- and/or substance-tight arrangements and measures which successively separate solid and liquid or manure and urine in a stable environment at the source, seal a manure pit gas- and liquid-tight, keep the liquid-tight floor intrinsically clean, level out the ammonia formation asymptotically, transport manure and urine separated to a closed collection unit and in this way expose both manure and urine to the environment only for a very short time and thus offer a solution to the problem that can be described as the 'nitrogen problem'.

For example, where closed stable floors reduce the ammonia emissions of an animal from about 13.3 kg to 8.6 kg per year, the closed floor and cleaning arrangement according to the present application can achieve such a reduction to a maximum of 3 kg per year.

The moveable cleaning unit with rinse-slide-suction facility and container as discussed above may, in a second aspect of the present application, be provided as a stand-alone unit, in particular in the embodiment with further suction facility, which is connected to the container or to a further separate container on the moveable cleaning unit, and more particularly wherein the further suction facility, viewed in the intended direction of movement of the moveable cleaning unit, is located behind the rinse-slide-suction facility.

This also applies to the embodiment of the moveable cleaning unit in which the further suction facility of the moveable cleaning unit connects to a further container of the cleaning unit, for collecting during use a manure film left on the floor, and the embodiment in which the moveable cleaning unit is equipped with a liquid reservoir for cleaning liquid having at least one nozzle coupled thereto that is arranged for applying cleaning liquid to the load-bearing surface of the floor during use.

For various applications, the suction function of such a moveable cleaning unit may also be replaced by the cyclonic function described above. Also, one or more of the further suction facility, the further container and the liquid reservoir for cleaning liquid with the at least one nozzle coupled to it can be provided as a separate, add-on module, for use with a moveable cleaning unit.

Likewise, a floor having a load-bearing surface in the form of a liquid-tight layer of Polycarbonate/Acrylonitrile Butadiene Styrene, PC/ABS, or a panel made of fiber-reinforced plastic composite on which a liquid-tight layer of PC/ABS forming the load-bearing surface is applied and/or a panel made entirely of PC/ABS, for example, a panel having a three-dimensional channel plate shape, whether or not formed by extrusion as described above, may be provided separately if desired for forming a self-supporting structure, for example.

Accordingly, in a third aspect, the present application provides a floor or base arrangement comprising a load-bearing liquid-tight surface, wherein the liquid-tight load-bearing surface comprises a liquid-tight layer of Polycarbonate/Acrylonitrile Butadiene Styrene, PC/ABS.

In an embodiment of this floor or base arrangement, mineral-filled PC/ABS is characterized by a coefficient of thermal expansion less than 5.0 10⁻⁵ cm/cm/°C in a range of at least -20 °C to +80 °C.

In accordance with the present application, the load-bearing surface of the floor or base arrangement comprises an anti-slip coating attached to the PC/ABS, as described above.

In a still further embodiment, the floor or base arrangement comprises a panel made entirely of PC/ABS, in particular where the panel has a three-dimensional channel plate shape, with a further surface spaced from the load-bearing surface, which surfaces form channels between the surfaces by transverse connecting strips. In particular, wherein the panel has an extruded channel plate shape and/or wherein the floor comprises a panel made of fiber reinforced plastic composite on which the PC/ABS liquid-tight layer forming the load-bearing surface is applied.

The floor or base arrangement also provides for an embodiment having liquid-tightly interconnected panels.

The load-bearing surface of the floor or base arrangement, in an embodiment of the present application, has an inclined or curved shape to at least one side thereof for forming a single or multiple down slope, in particular a spherical segmental curved shape.

The floor or base arrangement may be used in one or more of the walls of aircraft, wind turbines and their blades, truck beds, bicycle paths, chemical cleaners for the collection and discharge of process water and spills, truck and car wash installations, installations for refueling and cleaning of vehicles including cars, buses, trains, coaches and aircraft, installations for the collection and discharge of plant protection products, airport installations for the de-icing of aircraft, parking roofs, parking decks and as a liquid-tight floor of a facility for keeping livestock.

These and other aspects of the present application are further illustrated in detail by means of the figures of the enclosed drawings.

### Brief Description of the Figures

Figure 1 shows a perspective view, in partially broken away form, of a liquid-tight arrangement comprising three individual three-dimensional spherical liquid-tight panels made of Polycarbonate/Acrylonitrile Butadiene Styrene, PC/ABS, according to an embodiment of the present application in a two-sided down slope, oriented towards two liquid discharge areas.
Figure 2 shows a perspective view of a liquid-tight arrangement comprising three individual three-dimensional flat liquid-tight panels of PC/ABS, according to a further embodiment of the present application, in a multilateral down slope, oriented to one liquid discharge area or discharge point.
Figure 3a, Figure 3b, and Figure 3c show sample cross-sectional details at enlarged scales of the three-dimensional structure of panels, in various designs, of the liquid-tight floor type shown in Figure 1 and Figure 2.
Figure 4 shows an enlarged scale detail of a type of a liquid, sludge, manure, urine disposal and collection system of the liquid-tight panels shown in Figures 1 and 2 and coupled to form a liquid-tight floor.
Figure 5 shows a perspective view of a panel consisting of a fiber-reinforced plastic composite on which a layer of PC/ABS according to the present application has been applied.
Figure 6a and Figure 6b show a cleaning unit in bottom and side view, respectively, with different details and functions according to the present application.

### Detailed Description of the Figures

Wherever the term 'liquid-tight' is used in the following description and claims, it means that each floor panel, both individually and composed into one liquid-tight floor, viewed from the load-bearing surface, is both liquid-tight and substance-tight, but can also be intrinsically gas-tight. So more generally possessing fluid tightness.

For brevity's sake, the term 'liquid-tight' is used in this description and conclusions, as it is a term from the literature and regulations and as such is recognizable for its primary function, which is impermeability.

The figures are example figures, equal parts or parts with the same or corresponding function are indicated with equal reference numerals. The application is in no way limited to the embodiments shown and described.

The detailed figures and description first disclose the main functions of various embodiments of a liquid-tight panel 1, also called a floor panel, and multiple panels combined to form a liquid-tight floor or base or bottom arrangement 19, with functions of one, two, or multiple-sided down slope and composite or separate liquid, sludge, or slurry removal.

In a further elaboration in this description, of a particular implementation type, a detailed embodiment and its environment are discussed in more detail.

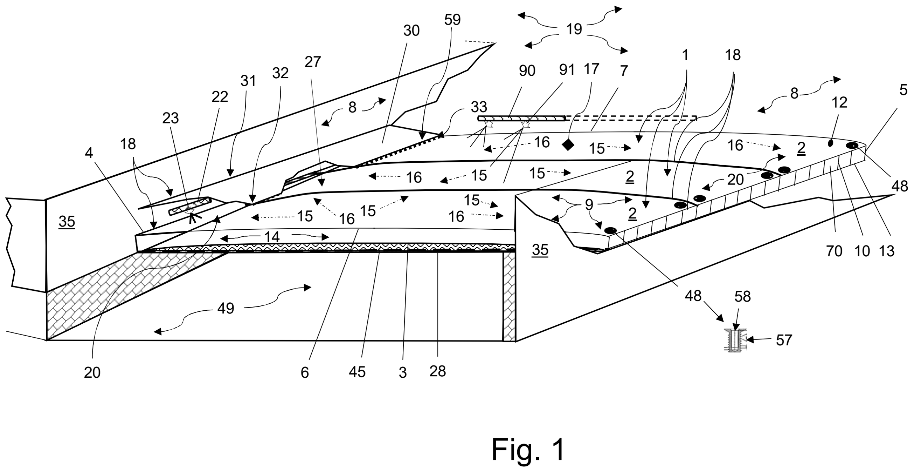

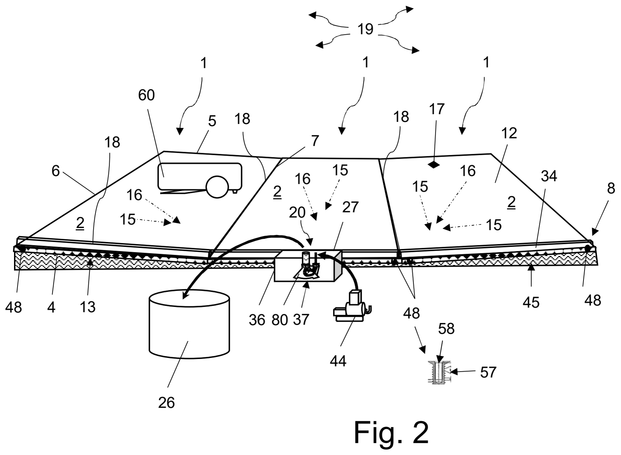

In Figures 1, 2, 3a, 3b and 5, each panel 1, 100, 110, 150 comprises a load-bearing liquid-tight surface 2, that is, the surface on which activities take place as discussed in the foregoing, and an opposing unloaded surface 3, which allows the liquid-tight panel to rest on a ground surface 45, for example, including a profiled ground surface in the form of, for example, a bonded foundation layer above a stable slatted floor, as shown schematically in Figures 1 and 2, or covers a structural boundary 35 such as a manure pit 49, as shown in Figure 1.

In the embodiment shown, the liquid-tight panels 1, 100, 110 and 150 are rectangular in shape and are bounded by first 4 and second 5 opposite circumferential edges and third 6 and fourth 7 opposite circumferential edges. In the embodiment shown, the first and second circumferential edges 4 and 5 are along the short sides of the rectangular liquid-tight panel and the third and fourth circumferential edges 6 and 7 are along the long sides of the liquid-tight panel.

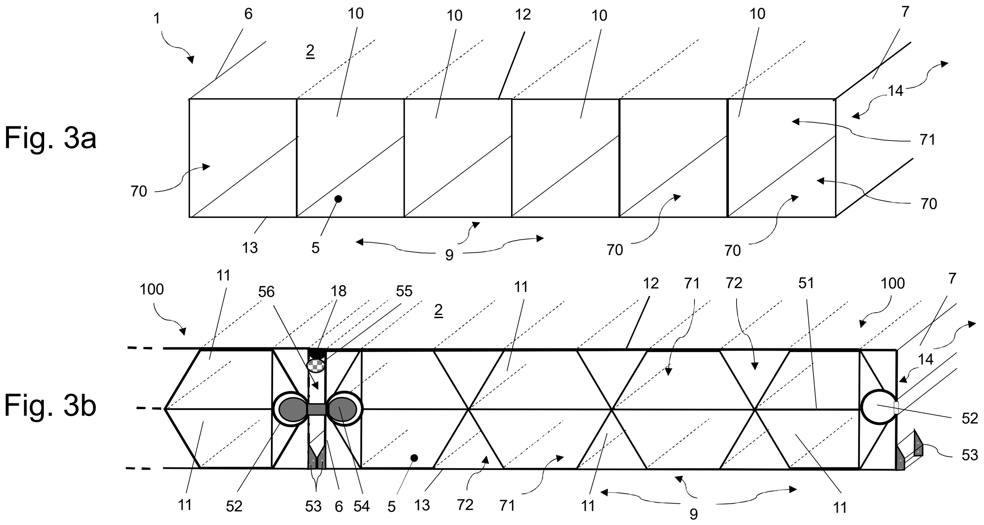

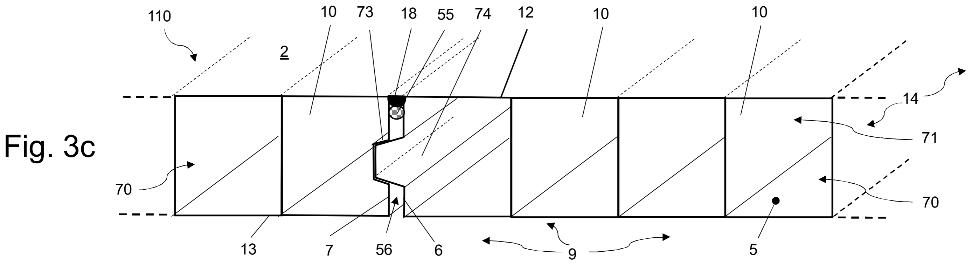

The liquid-tight panel 1, 100, 110 is in an embodiment integrally formed from mineral filled Polycarbonate/Acrylonitrile Butadiene Styrene, PC/ABS, 14 into a three-dimensional composite structure 9 as shown in Figure 1, 3a, 3b and 3c.

Between the top or cover layer 12 and bottom layer 13, plate-shaped elongated strips or lamellae 10 and 11, respectively, extend transversely in a longitudinal direction. The strips 10 are formed perpendicularly transverse to the top or cover layer 12 and bottom layer 13, as shown in Figure 3a or Figure 3c, and the plate-shaped elongated strips 11 extend in longitudinal direction obliquely transverse to the top or cover layer 12 and bottom layer 13, as illustrated in Figure 3b.

The strips 10, 11 and the top or cover layer 12 and the bottom layer 13 form a single integrated three-dimensional structure 9 such that a panel, by the chosen shape, spacing and arrangement of the strips as well as their thickness and the thickness of the top or cover layer and the bottom layer, provides sufficient resistance to the specified static and dynamic loads. For example, with a strength of 2 or 2.5 N/mm² when used as a liquid-tight floor in an environment for keeping animals, such as cattle.

The three-dimensional structures 9 may be referred to by the term 'channel plate' because the spaces 70, 71 and 72 between the strips 10, 11 and the top or cover layer 12 and bottom layer 13 form hollow or open channels in the longitudinal direction of the strips.

The three-dimensional structure 9 may be formed in a uniform run in an extrusion process with a raw material of a thermoplastic polymer 14 of preferably, but not exclusively, mineral-filled PC/ABS design type XZ92720.00 or a corresponding type of PC/ABS specially designed for extrusion, for example.

In the composition of the extruded three-dimensional structure 9, in the embodiment shown in Figure 3a, Figure 3b and Figure 3c, the parallel top or cover layer 12 and the bottom layer 13 enclose as flat layers or walls the elongated strips 10 or 11.

In a further embodiment, as shown in Figure 3b, an additional support layer 51 is extruded into the three-dimensional structure 9 of the panel 100. This support layer 51 is connected to the oblique plate-shaped elongated strips 11 and extends parallel to the top and bottom layers 12, 13 and its main purpose is to counteract any buckling of these strips due to dynamic or static mechanical or biological loads. It will be understood that for this purpose an additional support layer 51 or multiple support layers 51 may also be integrated into the three-dimensional structure of the floor panel 1 or the floor panel 110 (not shown). Of course, in the embodiment shown in Figure 3a and Figure 3c, oblique strips 11 may also be provided in one or more directions if desired.

In a further embodiment, the three-dimensional structure 9 may have a square, hexagonal, or other polygonal shape or structure.

The channel plate thus produced provides a three-dimensional structure in which the internal spaces or channels are formed by an interconnected lattice structure of strips of a certain thickness. The thickness of the elongated plate-shaped strips integrated in the channel plate structure during the extrusion process depends on the design requirements and, depending on the application purpose, is set in the order of, for example, 0.5 to 5 mm, more particularly between 1 and 3 mm.

A channel plate produced in this manner obtains in the same manufacturing process, simultaneously or sequentially, a top or cover layer 12, if necessary one or more side layers or walls, at one or more circumferential edges 4, 5, 6, 7 of a panel 1, 100, 110, a recess 52, spacers 53 as illustrated in Figure 3b, or a tongue 74 and groove shape 73 as shown in Figure 3c, and a bottom layer 13 of comparable thickness to the strips, which, because of the method of manufacture, are fused as a single unit with the strips 10, 11 of the internal structure to form a single final channel plate product. Of course, channel plates with other thicknesses can be manufactured. As such, a channel plate thus produced is intrinsically gas- and liquid-tight from the load-bearing surface 2 on the top or cover layer 12.

An extrusion machine is used to produce a channel plate with the desired properties of strength, stiffness and so on, as described in the foregoing.

In the extrusion process, PC/ABS is extruded through an extrusion mold in a heated or tempered state, to form an integrated channel plate structure.

The portion of the channel plate that leaves the extrusion mold is then cooled down in a subsequent stage of the production process by means of, among other things, a controlled air cooling through the internal spaces or channels of the channel plate, along the formed strip structures and walls or layers of the intended channel plate and is held in its shape by vacuum.

That is, immediately after leaving the mold, the channel plate is further guided through a vacuum chamber, through which the warm, still unstable channel plate structure, partly under the influence of the vacuum present, is held in its outer shape, until the channel plate has cooled down further and acquires its final solid shape and stability.

The cooling process initially mainly involves air-controlled cooling along the strips and walls of the channel plate to be formed, thus contributing to the resistance to any deformation of the still hot and plastic strip structure during the production process.

Due to the temperature drop caused by the air cooling, the extrusion product takes on its hard gradation until the whole is finally cooled down and has taken on all the properties of strength, stiffness and so on.

In this way, the production of a channel plate is a continuous production with, for example, a fixed width dimension, namely the width of the extrusion mold and a length corresponding to a desired or practically manageable length of a liquid-tight floor panel.

For example, if a liquid-tight floor panel should be 3 meters long, then in the production process the length of a produced channel plate is determined by cutting, sawing or equivalent operation at each 3 meters, so that a multiple of 3-meter-long channel plates with a fixed width are produced. The example of 3 meters is arbitrary and may represent other sizes.

In a channel plate/liquid-tight floor element according to the present application, a floor panel can be processed as a flat plate version, but also with a two-sided down slope by giving a floor panel a convexity (camber) of, for example, 1 or 2 % or less or more, after extrusion, but even before the panel has cooled down completely. The double-sided down slope is thus provided into the cooling molecular structure of the PC/ABS thermoplastic without tension, whereby the panel, or the channel plate, retains this shape after cooling.

The convexity (chamber) is then applied in a warm state by, for example, bringing a still-warm channel plate section leaving the extrusion process into a desired shape by placing it as a whole, for example, in a half-pipe mold with an equal percentage of down slope, forming same accordingly and allowing it to cool down further in this form.

The preformed slope can be useful in those places where a liquid-tight floor system is installed and it is not possible to work with a 'straight' one-sided or multi-sided down-slope, but with a two-sided or multi-sided slope in the form of a 'cambering' installed floor system.

'Cambering' is a term from road construction and it means that an arrangement has a down slope to two or more sides, calculated from the center of the arrangement, and expressed as a percentage (%).

The ability of changing the three-dimensional structure 9 is found in the present invention in replacing the extrusion mold in the extrusion machine. Thereby, the choice of the shape of an extrusion mold and thus of the three-dimensional structure, i.e. the lattice structure with its strips and walls, is partly determined by the optimal calculation and elaboration of the desired strength and the required amount of PC/ABS thermoplastic polymer and design thickness of the vertical strips and layers or walls, as discussed above.

When joining or connecting two or more liquid-tight panels to form a composite liquid-tight floor arrangement 19, the spacers 53 of two adjacent liquid-tight panels 100 are placed against each other so that an elongated joint space 56 is formed between the circumferential edges of two adjacent panels. A same elongated joint space 56 between the circumferential edges of two adjacent panels 110 is formed by sizing the tongue 74 and groove 73 such that the joint space 56, after joining, remains sufficiently open. The shape of the tongue and groove 73, 74 may be rectangular, square, round, or as shown in Figure 3c trapezoidal, or any other suitable shape.

By means of, for example, a double designed elongated plastic rope 54, included in two opposite recesses 52, two individual liquid-tight floor panels 100 are jointed together. In the joint space 56, for the purpose of liquid-tight sealing of adjacent or successive liquid-tight floor panels 1, 100, 110, for example, a foam filling 55 is applied and thus liquid-tightly connected to form a liquid-tight arrangement 19 by means of a liquid-resistant joint sealant 18 extending in a longitudinal direction of the third 6 respectively fourth circumferential edge 7 in this example, see Figure 1, Figure 2, and Figure 3b.

In the embodiment of the panel 110 shown in Figure 3c, the joint space 56 is also sealed liquid-tight using, for example, a foam filling 55 and a liquid-resistant joint sealant 18 extending in longitudinal direction of the third 6 and fourth circumferential edges 7, respectively, in this example.

The type of sealant 18 is chosen depending on the type of liquids to which the load-bearing surface of the floor arrangement 19 is exposed too. A sealant suitable for this purpose, that has excellent adhesion to PC/ABS is, for example, commercially available under the product name SABA Ecoseal AC or SABA Ecoseal Bio HM.

It will be appreciated that panels 150 can be liquid-tightly interconnected in a similar manner to the panels illustrated in Figure 3b and Figure 3c.

In more detail, each liquid-tight floor panel 1, 100, 110 and 150 and the liquid-tight floor arrangement 19 as a whole, shown schematically in Figures 1 and 2, can meet the standard requirements for dynamic, static, mechanical, thermal and chemical loading. Standard requirements in this context include: TGB 1990; NEN 6702; NEN 6706; Eurocodes and CUR 96 that can handle a traffic class 600.

A liquid-tight floor panel or channel plate, in an embodiment thereof, may comprise a flat shape as illustrated in Figure 2, whereby for each individual liquid-tight floor panel 1 an independent one-sided individual down slope 15 and a direction of runoff 16 derived from this can be determined, schematically indicated by dash-dot arrows, for example directed towards the first circumferential edge 4, such that by the thus positioned individual liquid-tight floor panels 1 interconnected into a liquid-tight arrangement 19, a multi-sided down slope is created directed towards the lowest point or area of this liquid-tight arrangement. Liquids which end up on the load-bearing surface of the liquid-tight arrangement 19 composed in this way, flow off under the influence of gravity and a thus formed runoff 16 to a drainage area 20 on the load-bearing surface and to a drainage point 27 located at the lowest point on the first circumferential edge 4.

In the illustrated embodiment, the liquid-tight floor panel 1 has a two-sided spherical shaped down slope 15, extending from the first circumferential edge 4 to the second circumferential edge 5 and parallel to the third and fourth circumferential edges 6 and 7, extending over the central part or middle part of the liquid-tight floor panel 1 with a runoff direction 16 sloping towards the first circumferential edge 4 and slope 15 with a runoff direction 16 sloping down towards the second circumferential edge 5, as illustrated by dash-dot arrows in Figures 1 and 2.

At a liquid-tight arrangement 19 comprised of several liquid-tight floor panels 1 according to the schematically elucidated embodiments, as shown in Figures 1 and 2, a liquid barrier 8 may be provided at or externally alongside the first circumferential edge 4, respectively in a mirrored position of the liquid-tight arrangement 19 along the second circumferential edge 5 of the liquid-tight arrangement 19, and liquid-tightly connected to the liquid-tight arrangement 19 by, for example, applying a liquid-resistant joint sealant 18 adhering to the PC/ABS. The liquid barrier 8 may comprise, for example, a sill 34 made of metal or plastic elements, see Figure 2. In a further elaboration, the liquid barrier 8 may also comprise a constructional boundary 35.

This additional barrier 8 protects against the escape of liquids from the liquid-tight arrangement 19 which, under the influence of gravity and down slope 15, flow in a runoff direction 16 from the load-bearing surface 2 into a liquid collection arrangement or discharge facility 27, see Figure 2.

The adhesive sealant 18 shall be applied at the intersection of the coating 12 of the liquid-tight arrangement and the sill 34 or the flat vertical structural boundary 35.

In the embodiments shown, the liquid-tight arrangement 19 is provided at the entire load-bearing surface 2 with an anti-slip layer 17 attached to each floor panel 1, so that vehicles, objects, persons, and animals driving up and over or placed on it do not slip or skid on the load-bearing surface.

Such an anti-slip coating may consist, for example, of a so-called lean distribution of fine chippings, fine crushed stone, fine gravel grains and/or fine metal particles embedded in a polyurethane coating. The number of grains and/or particles and the grain/particle size can be tailored to the desired anti-slip effect. Of course, the anti-slip coating must not interfere with the cleaning effect of a moveable cleaning unit moving over the liquid-tight load-bearing surface.

For example, a practical length-to-width ratio of each floor panel is approximately 2:1, where the maximum length and width dimensions are chosen such that a single panel or a set of stacked floor panels 1 can or may be transported appropriately in a shipping container or road vehicle.

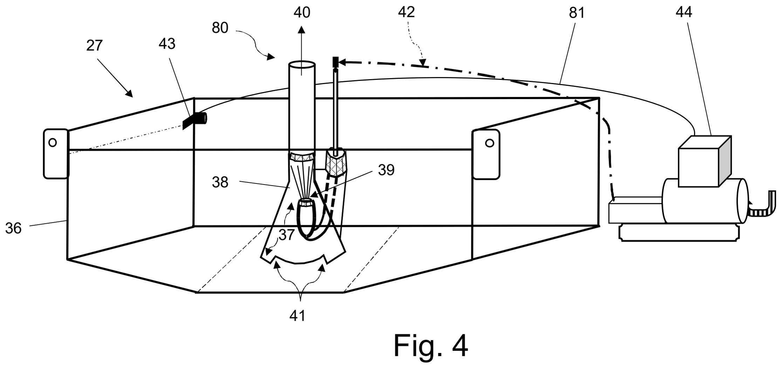

The liquid-tight floor panel 1, in the embodiment of a liquid-tight floor arrangement 19 shown in Figures 1 and 2, is provided at the first circumferential edge 4 with a liquid collection arrangement or discharge facility 27, which is shown in more detail in Figure 4.

This discharge 27 is provided lower in level relative to the liquid-tight arrangement 19 and includes a pump tank 36 and a venturi operation 37 in a pump housing 38, wherein the operation of the venturi or taper is based on creating a negative pressure 41 inside the pump housing 38 by, for example, forcing water under high pressure 42 from a high-pressure water system 44 through a fixedly mounted nozzle 39 in the pump housing 38 and discharging it in the direction of discharge 40.

The shape of the pump housing 38 and the venturi or taper is based on the flow behavior of liquids and the physical principle that an increase in the velocity of a liquid is accompanied by a decrease in pressure. The increase in the velocity of the liquid in the discharge direction 40 causes a relatively large flow rate to be thrust into the discharge direction 40. Due to the negative pressure 41 in the pump housing 38, as a result of coupling a high-pressure water system 44 to the pump housing 38, the venturi action 37 in the pump housing 38 seeks to compensate for the outflow energy by propelling available water in the discharge direction 40.

The capacity of the venturi operation 37 is so large that liquid in the pump tank 36, due to the relatively small pump stroke, is sucked out almost immediately. When the pump tank 36 becomes empty, the venturi operation 37 will simultaneously lose its vacuum as atmospheric air is drawn from the pump tank.

At least sufficient supplemental water 42 is supplied to the pump tank 36 as rinse water, such that the pump housing 38 will remain completely submerged and therefore will not draw in atmospheric air. The discharged flow rate is continuously compensated, and this allows the venturi operation 37 to be actively maintained during the pumping period.

A level switch or sensor 43 in the pump tank 36 activates 81, when the liquid collected in the pump tank 36 to be discharged has again reached a certain level, the high-pressure water system 44 causing the venturi operation 37 to engage and again discharging 40 liquid from the pump tank 36.

Since the pump housing 38 and the venturi operation 37 can be sized to have sufficient space to allow water, sediment and coarse particles to pass through, and because there are no rotating parts, there will be no stagnation of water to be discharged with sediment, so that through the venturi operation 37, wastewater and sediment, possibly with coarse chunks, can be transported to an external, for example to the environment closed collection unit 26, if desired in combination with a sludge trap/separator, as shown in Figure 2.

As an example, a discharge rate of about 14 I/min and an operating pressure of about 140 bar are feasible. The pump housing 38, according to common practice, is normally provided with a connection for a high-pressure pipe according to the state of the art.

Thus, an effectively operating vacuum suction or pumping system 80 is obtained, arranged for transferring during operation to the collection unit 26 liquids collected by the liquid collection arrangement.

The composite liquid-tight arrangement 19 is provided alongside, for example, the first circumferential edge 4 and the second circumferential edge 5, respectively, with a spraying system which, in this embodiment, is composed of a round or tubular body or pipe 22 with a number of spray nozzles 23 distributed along its length. By connecting, for example, the high-pressure water system 44 also to the body or pipe 22, water can be forced through the spray nozzles 23.

For example, the high-pressure water system 44 may be periodically turned on or activated so that the spray nozzles 23 spray an amount of water over the liquid-tight arrangement 19, depending on the water pressure and time of operation issued. As a result of the down slope 15 and the direction of runoff 16 of the liquid-tight arrangement 19, the spray water collects back on the liquid disposal area 20 until it collects in the pump tank 36 and is extracted again by means of the venturi operation 37.

The high-pressure water system 44 which forces water through the spray nozzles 23 may additionally be provided with a supplemental liquid, for example, in the form of peroxide or acetic acid or a similarly effective substance, in order, for example, to lower the pH in an environment for keeping stable animals and thereby to inhibit urease and counteract ammonia formation. Research and studies have shown that peroxide or acetic acid inhibits the reaction between the enzyme urease and urea.

In a further embodiment, a liquid-tight floor panel 1 comprises accessible coupling elements, such as threaded bushings 48, located at a distance from and alongside at least one circumferential edge, fixedly installed in the floor panel 1, as illustrated schematically in Figure 1 and Figure 2.

Externally, such threaded bushing 48 has a cutting thread 57 with which the bushing 48 can be screwed into an external material such as PC/ABS, plastic, wood, and the like and has internally a nominal thread 58 of a dimension with which, depending on the chosen attachment to a liquid-tight floor panel 1, a DIN bolt of, for example, M16 or M10 can be attached to the threaded bushing 48. This as schematically illustrated at an enlarged scale in the detail of Figure 1 and Figure 2.

This feature preferably serves to detachably couple fasteners, to couple adjacent liquid-tight floor panels 1 further mechanically securely together, to durably meet requirements and standards with respect to dynamic, static, mechanical, thermal and chemical properties of the liquid-tight arrangement 19.

Preferably, these threaded bushings 48 can also be used to attach a drive-up and drive-down ramp to a liquid-tight arrangement 1, for example along the third circumferential edge 6 and/or fourth circumferential edge 7 thereof (not shown).

The detailing shown in Figures 1 and 2 relates to a liquid-tight arrangement 19 in a single or multiple down slope 15, where the liquid-tight arrangement 19 is bounded by a sill 34 or connects to a structural boundary 35 in, for example, a stable environment.

An average stable environment known from practice is designed above a liquid-tight manure pit 49, as illustrated in Figure 1, which is covered by a slatted floor 28, where walking or standing cattle drop manure and urine that, singularly or collectively under the influence of gravity, sinks through the slatted floor 28 into the manure pit 49 and continues to accumulate there as slurry.

As indicated above, the chemical reactions of manure and urine together create undesirable ammonia formation and in a further reaction, undesirable internal and external nitrogen deposition, due to the volatilization of ammonia vapors into the environment.

The task of the present application is partly to keep the manure and urine as solid substances and liquids separate from the source, i.e. the animal, and to dispose of them separately, so that ammonia formation cannot occur or can occur only to a very small extent.

In the present invention, in a technical embodiment by means of a liquid-tight arrangement 19, the entire existing manure pit 49 is sealed gas- and liquid-tight by completely covering the slatted floor 28 by providing the liquid-tight arrangement 19 from, on the one hand, the structural boundary 35 located at the first circumferential edge 4 to, on the other hand, the structural boundary 35 located at the second circumferential edge 5.

For example, the height of the structural boundary 35 corresponds, on average, to the height of an average cubicle in a stable environment with cubicles with respect to the slatted floor 28, except that the round, boxed or tubular body 22 of the high-pressure water system 44 with spray nozzles 23, may be attached against the vertical structural boundary 35 above the liquid-tight arrangement 19, with the spray nozzles 23 in the liquid discharge area 20 reaching up to the load-bearing surface of the liquid-tight arrangement 19.

For shielding the boxed or tubular body 22 and the spray nozzles 23 attached thereto, from disturbance by manure, sludge, and other solid substances, for example, in a stable environment, a plank- or plate-shaped body 30 with a first circumferential edge 31 is mechanically connected to the structural boundary 35 and with, for example, a resistant jointing sealant 18 gas- and liquid-tightly applied against the structural boundary 35.

The plank- or plate-shaped body 30 is thus placed above the round or tubular body 22 and the spray nozzles 23 of the high-pressure water system 44.

Such a plank- or plate-shaped body 30 which is liquid-tightly affixed and fastened with a first circumferential edge 31 against the vertical structural boundary 35 rests on the load-bearing surface 2 of the liquid-tight arrangement 19 based on its own weight in such a way that a gap-like space 33 remains between the second circumferential edge 32 of the plank- or plate-shaped body 30 and the load-bearing surface 2 of the liquid-tight arrangement 19.

The plank- or plate-shaped body 30 is provided at the second circumferential edge 32 with lugs 59 resting on the load-bearing surface 2 of the liquid-tight arrangement 19, so that in this way a slit-shaped space 33 is created by the space between the second circumferential edge 32 with the lugs 59 and the load-bearing surface 2 of the liquid-tight arrangement 19, so that the water pressed by the high-pressure water system 44 through the circular or tubular body 22 and the spray nozzles 23 can flow through this slit-shaped space 33 between the lugs 59 over the load-bearing surface 2 of the liquid-tight arrangement 19.

As a result of the slope 15 and runoff direction 16 to the liquid discharge area 20, the inflowing liquids will flow through the crevice space 33 to the structural boundary 35 and further because of the slope 15 and runoff direction 16 through the liquid discharge area 20 to the pump tank 36.

The round or tubular body 22 of the high-pressure water system 44, which is mounted to the structural boundary 35 along the first circumferential edge 4 and second circumferential edge 5, respectively, starts where the liquid-tight arrangement 19 along the third circumferential edge 6 starts and ends where the liquid-tight arrangement 19 along the fourth circumferential edge 7 ends.

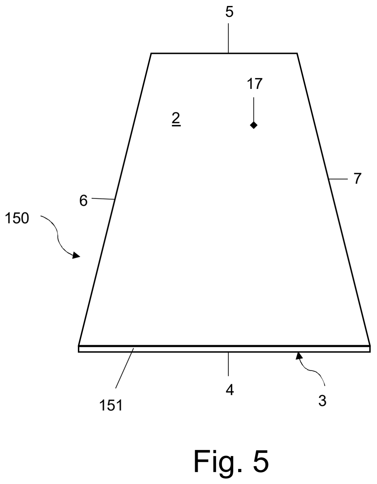

In an embodiment, as schematically, perspectively illustrated in Figure 5, the present application provides that the floor comprises a panel 150 made of a support 151 of fiber-reinforced plastic composite on which a liquid-tight layer PC/ABS as the load-bearing surface 2 is applied, optionally with an anti-slip layer 17.

Such a liquid-tight floor or base arrangement 150 of PC/ABS as the load-bearing surface 2 on a support 151 of fiber-reinforced plastic composite may also be provided as an integrated structure in the form of a channel plate, in a hexagonal form or similar structural form. If necessary, with a multi-sided enclosing plastic skin, such as a single or multi-layer adhesive PC/ABS polymer or fiberglass skin, epoxy, polyurea or polyurethane or similar adhesive plastics and which is, on the one hand, relatively light in weight and, on the other hand, suitable for heavier traffic loads of traffic class 600 (20 tons axle load) or lighter.

The round or tubular body 22 connected to the high-pressure water system 44 may also operate as a further spraying system in accordance with the present application for additional cleaning of the floor arrangement. In the embodiment according to Figure 1, a separate or further spraying system in the form of a tubular body or pipe or conduit 90 with spray nozzles 91 is also provided along the floor arrangement 19 for additionally applying cleaning liquid to the load-bearing surface. This further spraying system 90, 91 may be connected to the high-pressure water system 44 or a separate high-pressure system (not shown).

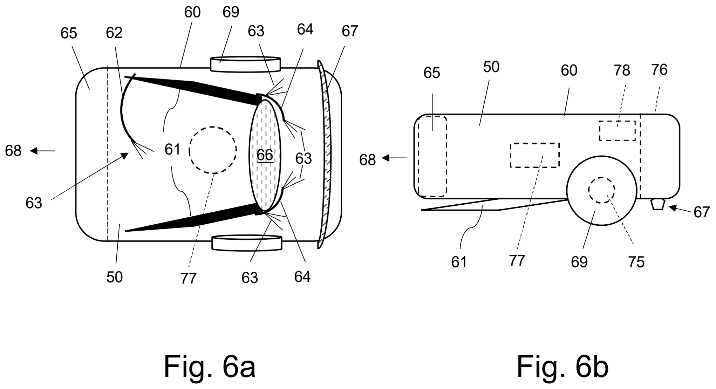

At and over the liquid-tight arrangement 19 moves a cleaning unit 50, shown in Figure 6a and Figure 6b, whose functions are programmed to the current state of the art, such that in a semi-continuous movement the sludge and/or manure and remaining residual liquids from the load-bearing surface 2 of the liquid-tight arrangement 19 are taken up or discharged to a respective container storage 26 that is closed to the environment or prior temporarily stored in a container 60 placed on or attached to the cleaning unit 50.

Periodically, in the work movements of the cleaning unit 50, the filled container 60 on or attached to the cleaning unit 50 shall be emptied into a respective container storage 26 that is closed to the environment.

Moveable cleaning units that pick-up manure or a manure urine mixture from a manure corridor with a scraper, scoop and/or vacuum collection system and discharge same into a collection unit are commercially available. These so-called manure robots find their way through a stable using radio control or ultrasonic sensors. In a further elaboration, one or more types of manure robots have a gyroscope which, in combination with sensor technology, allows a manure robot to turn around its axis and determine its position in relation to its starting point at all times.

Figure 6a and Figure 6b show a cleaning unit 50 with various details and functions in accordance with the present application, such as an additional rinsing and suction unit. The figures are example figures, equal parts or parts with the same function are indicated with equal reference numerals. The present application is in no way limited to the embodiment shown and described.

In Figure 6a, in bottom view and in Figure 6b in side view a cleaning unit 50 according to the present application is shown, which cleaning unit 50 is mobile or independently moveable over the load-bearing surface of a floor, in particular for use in a stable environment. This cleaning unit comprises a slurry container 60 and a slurry scraper 61, a first spray line 62, one or more nozzles or sprayers 63; a second spray line 64 with one or more nozzles or sprayers 63, which connect to a liquid reservoir 77 of the cleaning unit, schematically shown with a dashed circle line, a control unit with, for example, computerized control logic and sensors 65 as well as a vacuum suction nozzle 66.

For moving the cleaning unit, wheels 69 are provided which are coupled to an electric motor 75 or similar drive in the cleaning unit, as shown schematically with an interrupted circle line. For powering the electric motor, rechargeable battery(s) are included in the cleaning unit (not shown). In practice, therefore, a stable will be equipped with a charging station, which allows the cleaning unit to independently connect to recharge its battery(s).

If necessary, two or more cleaning units can be used, also depending on the stable size and capacity of the battery(s) and the energy consumption of the cleaning unit, where, for example, one of the cleaning units is specially equipped for post-cleaning of the floor with a further spraying system as described above.

Parts 61, 62, 63, 64, and 66, when combined, form a rinse-slide-suction facility for the collection of manure from a load-bearing surface.

The operation of the rinse-slide-suction facility is arranged to slide or sweep manure or a mixture of manure and urine, by a forward motion, together and, under the influence of vacuum, suck it up by means of the vacuum suction nozzle 66 and deposit same in the manure container 60 forming part of the cleaning unit 50.

To further facilitate and optimize this sliding and vacuuming process, the first spray line 62 with nozzles 63 can be activated and water is sprayed through the nozzles 63 onto the load-bearing surface 2 of the floor, after which the vacuum nozzle 66 picks up the mixture of manure and urine and deposits same in the manure container 60.

The cleaning unit 50 further provides a second spray line 64 having nozzles 63 whose function is to wet, as a further spraying system, after the operation of the primary spraying system 22, 23, the load-bearing surface 2 of a floor so that residues of the mixture of manure and urine, after the vacuum nozzle 66 has sucked up this mixture, are diluted for the purpose of a clean uptake by a further suction facility.

The present application provides for an extension of the functionality of the cleaning unit 50 by the additional provision of a further suction facility or further vacuum suction nozzle 67. This further vacuum suction nozzle 67 preferably extends over the entire width of the cleaning unit 50 and is, viewed in the direction of movement 68 of the moveable cleaning unit 50, for the collection of solid substances, located behind the rinse-slide-suction facility 61, 62, 63, 64 and 66, as illustrated in Figure 6a and Figure 6b.

That is, positioned behind the second spray line 64 on the opposite side of the direction of movement 68 of the cleaning unit 50.

The second spray line 64 and the nozzles 63, in the present application, wet the load-bearing surface 2 of the liquid-tight arrangement 19, and the further vacuum suction nozzle 67 sucks up the remnants of the wet substance of liquid and organic matter and deposits same also in the manure container 60 or in a further container 76 of the cleaning unit 50.

In a further embodiment according to the present application, the cleaning unit is provided with a further liquid reservoir 78 for cleaning liquid, with at least one nozzle coupled thereto arranged for applying cleaning liquid to the load-bearing surface of the floor during use. In an embodiment, for example, one of the spray lines 64 and associated nozzles may be connected to this reservoir. Of course, further nozzles or sprayers connected to this further reservoir may also be provided (not shown). As a cleaning liquid, water with urease inhibitors such as peroxide or acetic acid may be used, for example, as discussed above.

This extension of the functionality of the cleaning unit 50 aims to completely clean the load-bearing surface 2 of a liquid-tight arrangement 19 of any residual liquids and solid (manure) substances. This cleaning result aims at a completely clean surface of the liquid-tight arrangement 19.

Distinctive in the present application is the fact that on a completely clean liquid-tight arrangement 19, cleaned in this manner, no residue of urine and manure remains and thus no ammonia can be formed either. As a result, the object of the invention is achieved or asymptotically achieved.

By providing the cleaning unit 50 in the present application with this additional or further vacuum suction nozzle 67, the described level of cleaning is permanently and repeatedly achieved and expressed in each working passage and a new clean level of cleaning in a stable environment is achieved. The further suction facility 67 can operate according to the principle of a vacuum cleaner for liquids, i.e. a water vacuum cleaner, as well as according to the venturi operation explained above, by means of a construction corresponding to the vacuum suction or pump system 80.

For an expert, further modifications and adjustments are conceivable based on the above-described embodiments, which further modifications and adjustments are all considered to be encompassed by the enclosed claims.

## Claims

1. Cleaning unit (50), arranged for moving independently over a load-bearing surface of a liquid-tight floor for collecting solid substance applied at the floor, the cleaning unit (50) comprising a rinse-slide-suction facility (61, 62, 63, 64, 66) and a container (60) for collecting solid substance applied at the load-bearing surface of the floor, **characterized in that** the cleaning unit (50) comprises a further suction facility (67) for collecting cleaning liquid applied at the load-bearing surface of the floor, wherein the further suction facility (67) is located behind the rinse-slide-suction facility (61, 62, 63, 64, 66) viewed in the direction of movement (68) of the cleaning unit (50) for collecting the solid substance.

2. The cleaning unit (50) according to claim 1, wherein the rinse-slide-suction facility (61, 62, 63, 64, 66) is arranged for performing a primary cleaning process by collecting solid substance applied at the floor and comprises a further spraying system (63, 64) for applying cleaning liquid at the floor for performing a post-rinse and post-cleaning by the further suction facility (67).

3. The cleaning unit (50) according to claim 1 or 2, wherein the container (60) is arranged for collecting cleaning liquid collected by the further suction facility (67).

4. The cleaning unit (50) according to claim 1 or 2, wherein the further suction facility (67) connects to a further container (76) of the cleaning unit (50) for collecting cleaning liquid collected by the further suction facility (67).

5. The cleaning unit (50) according to one or more of the preceding claims, comprising a liquid reservoir (77) for cleaning liquid having at least one nozzle (63) connected thereto for applying cleaning liquid at the load-bearing surface of the floor.

6. The cleaning unit (50) according to one or more of the preceding claims, wherein the further suction facility (67) comprises a vacuum suction system.

7. The cleaning unit (50) according to one or more of the claims 1 - 5, wherein the further suction facility (67) operates by venturi action.

8. The cleaning unit (50) according to one or more of the claims 1 - 6, wherein the rinse-slide-suction facility (61, 62, 63, 64, 66) comprises a sliding function (61) for collecting, by a forward motion of the cleaning unit (50), solid substance applied at the load-bearing the surface of the floor, a vacuum suction nozzle (66) for depositing said collected solid substance into the container (60), and a spraying system (62, 63, 64) for applying cleaning liquid at the load-bearing surface of the floor from the liquid reservoir (77), wherein the spraying system (62, 63, 64) comprises a first spray line (62) with one or more nozzles or sprayers (63) and a second spray line (64) with one or more nozzles or sprayers (63), wherein the vacuum suction nozzle (66) is located between the first spray line (62) and the second spray line (64) and the further suction facility comprises a further vacuum suction nozzle (67) located behind the rinse-slide suction facility (61, 62, 63, 64, 66), viewed in the direction of movement (68) of the cleaning unit (50) for collecting the solid substance.

9. The cleaning unit (50) according to claim 8, wherein the further vacuum suction nozzle (67) extends over the entire width of the cleaning unit (50).

10. The cleaning unit (50) according to claim 8 or 9, comprising a further liquid reservoir (78) for cleaning liquid having at least one nozzle (63) connected thereto for applying cleaning liquid at the load-bearing surface of the floor, in particular wherein the second spray line (64) connects to this further liquid reservoir (78).

11. The cleaning unit (50) according to one or more of the preceding claims, wherein the cleaning liquid consists of water or water containing a urease inhibitor, such as peroxide or acetic acid.

12. The cleaning unit (50) according to one or more of the preceding claims, wherein one or more of the further suction facility (67), the further container (76) and the liquid reservoir (77, 78) for cleaning liquid having at least one nozzle (63) coupled thereto for applying cleaning liquid to the load-bearing surface of the floor are provided as a separate add-on module.

13. The cleaning unit (50) according to one or more of the preceding claims, wherein the floor is a floor of a facility for keeping stable animals, such as a stable environment for different types of animals or livestock, including cows, pigs, horses, sheep and similar animals.

14. The cleaning unit (50) according to claim 13, wherein the solid substance comprises manure produced by the stable animals.

15. The cleaning unit (50) according to claim 13 or 14, wherein the further suction facility (67) is operatively arranged for collecting cleaning liquid and organic residues applied at the load-bearing surface of the floor, such as a manure film.
